# EUROPÄISCHE PATENTSCHRIFT

(11) **EP 1 815 170 B1**
(45) Veröffentlichungstag und Bekanntmachung des Hinweises auf die Patenterteilung: **01.07.2009**
(21) Anmeldenummer: 05807404.8
(22) Anmeldetag: 22.10.2005
(51) Int. Cl.: F16J 15/08

(54) **FLACHDICHTUNG**
FLAT SEAL
JOINT PLAT

(30) Priorität: 24.11.2004 DE 102004056638
(43) Veröffentlichungstag der Anmeldung: 08.08.2007
(73) Patentinhaber: Federal-Mogul Sealing Systems GmbH, 57562 Herdorf (DE)
(72) Erfinder: FLEMMING, Ralf, 57520 Langenbach (DE)
(86) Internationale Anmeldenummer: PCT/DE2005/001896
(87) Internationale Veröffentlichungsnummer: WO 2006/056151

(56) Entgegenhaltungen:
- EP-A- 0 606 567
- EP-A- 0 756 114
- DE-A1- 3 741 344
- PATENT ABSTRACTS OF JAPAN Bd. 1996, Nr. 01, 31. Januar 1996 (1996-01-31) -& JP 07 239034 A (NIPPON RIIKURESU KOGYO KK), 12. September 1995 (1995-09-12)
- PATENT ABSTRACTS OF JAPAN Bd. 018, Nr. 269 (M-1609), 23. Mai 1994 (1994-05-23) -& JP 06 042644 A (JAPAN METAL GASKET CO LTD; others: 01), 18. Februar 1994 (1994-02-18)

## Beschreibung

Die Erfindung betrifft eine Flachdichtung, insbesondere Zylinderkopfdichtung für Verbrennungskraftmaschinen, beinhaltend mindestens eine, mit mindestens einer Durchgangsöffnung versehene Funktionslage, die im Bereich der Durchgangsöffnung mit mindestens einer Sicke versehen und in diesem Bereich mit mindestens einem Stopperelement, insbesondere durch Schweißen, verbunden ist wobei das Stopperelement im wesentlichen der Kontur der Sicke entspricht und im Bereich der Sicke positioniert ist.

Eine derartige Flachdichtung ist beispielsweise durch die DE-A 101 30 326 bekannt geworden, wobei das Stopperelement nach Art einer zusammenhängenden Brille ausgebildet und, bezogen auf die jeweiligen Durchgangsöffnungen, radial hinter der Sicke durch Schweißen mit der Funktionslage verbunden ist.

Der DE-A 101 30 325 ist eine ein- oder mehrlagige Flachdichtung zu entnehmen, die mit mindestens einer Durchgangsöffnung versehen ist und im Bereich der Durchgangsöffnung mindestens eine im wesentlichen umlaufende Sicke aufweist, wobei im Bereich der Sicke mindestens ein formgeprägter Metallkörper vorgesehen ist, der mindestens einen vertieften Bereich aufweist, in dessen Ebene die Sicke angeordnet ist.

Die EP 0 606 567 A1 offenbart eine metallische Zylinderkopfdichtung mit einem Stopperelement am Brennraumrand. Das Stopperelement ist am dem Brennraumrand zugekehrten Bereich der Sicke verschweißt. Im Stegbereich verlaufen die Schweißnähte derart, dass die Sicke in ihrer Elastizität eingegrenzt ist.

Die JP 07239034 A offenbart eine Flachdichtung mit einem aufgeschweißten Stopperelement welches beidseitig der Sicke verschweißt ist. Durch diese Art der Verbindung wird die Sicke beim Einfedern gehindert.

Der Erfindung liegt die Aufgabe zugrunde, ein alternatives Flachdichtungsdesign bereitzustellen, wobei die Belastung im Verbindungsbereich zwischen Funktionslage und Stopperelement, insbesondere bei Umformvorgängen der Flachdichtung, gering sein soll. Des weiteren soll ein Verfahren zur Herstellung einer Flachdichtung vorgeschlagen werden, mit welchern Belastungen im Verbindungsbereich bei Formänderungen der Flachdichtung nicht gegeben sind.

Diese Aufgabe wird erfindungsgemäß durch die Merkmale des Patentanspruch 1 gelöst.

Vorteilhafte Weiterbildungen des Erfindungsgegenstandes sind den zugehörigen gegenständlichen Unteransprüchen zu entnehmen.

Diese Aufgabe wird erfindungsgemäß auch durch die Merkmale des Patentanspruch 6 gelöst.

Vorteilhafte Weiterbildungen des erfindungsgemäßen Verfahrens sind den zugehörigen verfahrensgemäßen Unteransprüchen zu entnehmen.

Schweißt man ein Stopperelement auf eine Funktionslage und formt beide anschließend um, so kann sich, aufgrund des Materialfließens, eine Scherbeanspruchung auf den Verbindungsbereich einstellen, sofern - wie bis dato ausgeführt - der Verbindungsbereich in der Nähe der Durchgangsöffnung vorgesehen wird. Um dies zu verhindern, wird der Verbindungsbereich hinter der, vorteilhafterweise als Vollsicke ausgebildeten Sicke vorgesehen.

Des weiteren können einzelnen Ringe (Stopperelemente) ohne Steganbindung an die Funktionslage geschweißt werden.

Vorteilhafterweise wird das Stopperelement in Abhängigkeit von der Anzahl der Durchgangsöffnungen als Brille ausgebildet.

Der Erfindungsgegenstand ist anhand eines Ausführungsbeispiels in der Zeichnung dargestellt und wird wie folgt beschrieben. Es zeigen:
- Figur 1: Prinzipskizze einer als Zylinderkopfdichtung einsetzbaren Flachdichtung;
- Figur 2: Schnitt gemäß Linie A-A der Figur 1.
- Figur 3: Alternative Zylinderkopfdichtung

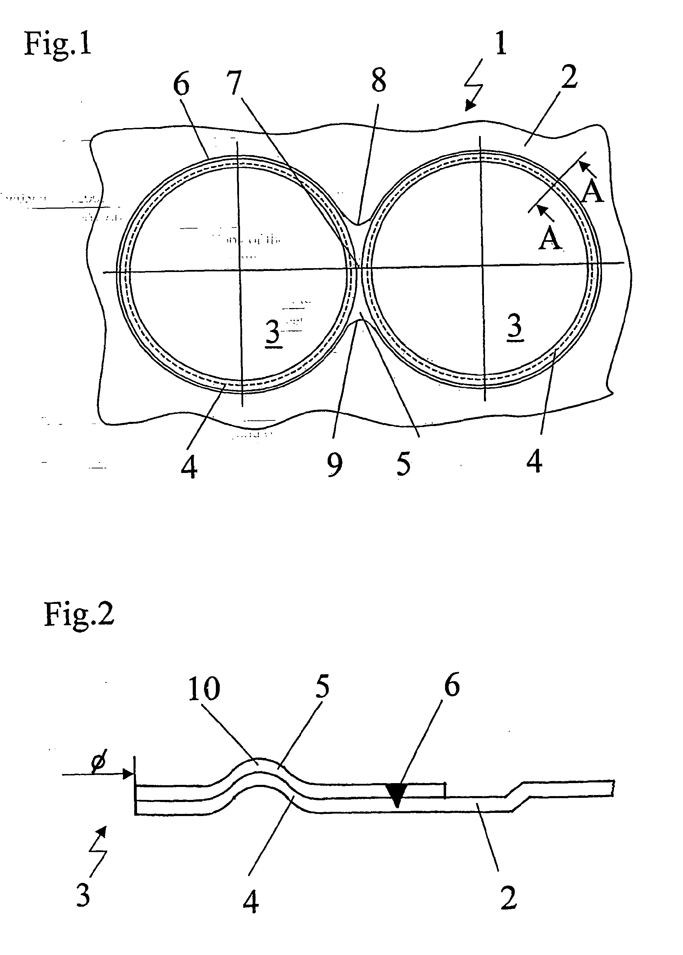

Figur 1 zeigt als Prinzipskizze eine Zylinderkopfdichtung 1, beinhaltend eine Funktionslage 2, in welcher mehrere nebeneinander liegende Durchgangsöffnungen 3 eingebracht sind. Die Funktionslage 2 ist im Bereich der Durchgangsöffnungen 3 mit einer umlaufenden Sicke 4 versehen, wobei unterhalb der Sicke 4 ein, nach Art einer zusammenhängenden Brille ausgebildetes Stopperelement 5 positioniert ist, das - bezogen auf die jeweilige Durchgangsöffnung 3 - radial hinter der Sicke 4 durch eine Schweißnaht 6 mit der Funktionslage 2 verbunden ist. Die Schweißnaht 6 ist hierbei durch Laserschweißen (Laserpunktschweißen) erzeugt. In diesem Beispiel sind die Durchgangsöffnungen 3 über einen schmalen Steg 7 voneinander beabstandet, so dass die Schweißnaht 6, unter Bildung von einander gegenüberliegenden Bögen 8,9, jeweils radial hinter den Sicken 4 ineinander übergeht.

Figur 2 zeigt einen Schnitt gemäß Linie A-A der Figur 1. Erkennbar ist die Funktionslage 2, das Stopperelement 5, die Sicke 4, die lediglich angedeutete Durchgangsöffnung 3 sowie die Laserschweißpunkte 6. Das Stopperelement 5 ist erfindungsgemäß auch mit einer Sicke 10 versehen, dergestalt, dass es an die Kontur der als Vollsicke ausgebildeten Sicke 4 angepasst ist, d.h. im wesentlichen ohne Spaltbildung auf der Sicke 4 aufliegt.

Vom Verfahrensablauf her wird die Zylinderkopfdichtung 1 wie folgt erzeugt: Funktionslage 2 und Stopperelement 5, die zunächst als plane Bleche vorgesehen sind, werden übereinander positioniert, wobei die Verbindung durch die Schweißpunkte 6 dergestalt herbeigeführt ist, dass nach einer anschließenden Umformung der aus Federstahl bestehenden Funktionslage 4 sowie des darüber angeordneten Stopperelementes 5 einerseits die Vollsicken 4 sowie 10 gebildet werden und dass andererseits die Schweißpunkte 6, bezogen auf die Durchgangsöffnung 3, im Anschluss an die Umformung radial hinter den Sicken 4,10 vorgesehen sind. Durch diese Maßnahme wird sichergestellt, dass im Verlauf des Umformvorganges sowie des damit einhergehenden Materialfließens keine Scherbeanspruchung auf die Schweißpunkte 6 ausgeübt wird.

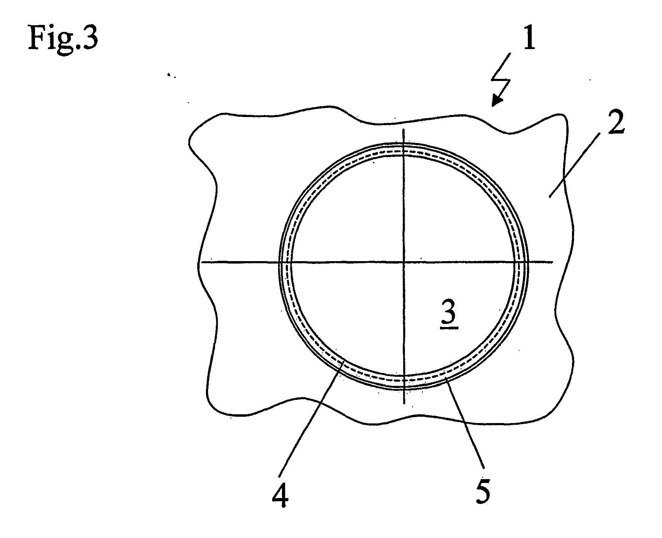

Figur 3 zeigt eine zu Figur 1 alternative Zylinderkopfdichtung 1'. Erkennbar ist die Funktionslage, die Durchgangsöffnung 3 sowie die Sicke 4. Lediglich angedeutet ist das Stopperelement 5', das in diesem Beispiel als die Durchgangsöffnung 3 umgebender einzelner Ring ausgebildet ist. Die Querschnittsform kann analog zu Figur 2 gewählt werden.

## Patentansprüche

1. Flachdichtung, insbesondere Zylinderkopfdichtung (1,1') für Verbrennungskraftmaschinen, beinhaltend mindestens eine mit mindestens einer Durchgangsöffnung (3) versehene Funktionslage (2), die im Bereich der Durchgangsöffnung (3) mit mindestens einer Sicke (4) versehen und in diesem Bereich mit mindestens einem Stopperelement (5,5'), insbesondere durch Schweißen (6), verbunden ist, wobei das Stopperelement (5,5') im wesentlichen der Kontur der Sicke (4) entspricht und im Bereich der Sicke (4) positioniert ist, **dadurch gekennzeichnet, dass** die Verbindung zwischen der Funktionslage (2) und dem Stopperelement (5,5'), bezogen auf die Durchgangsöffnung (3), nur radial hinter der Sicke (4) vorgesehen ist und dass die Verbindung (6) zwischen der aus Federstahl bestehenden Funktionslage (2) und dem Stopperelement (5,5') durch Punktschweißen erzeugt ist.

2. Flachdichtung nach Anspruch 1, **dadurch gekennzeichnet, dass** die Sicke (4) eine Vollsicke ist, und dass das Stopperelement (5,5') in entsprechender Weise ebenfalls eine Vollsicke (10) beinhaltet.

3. Flachdichtung nach Anspruch 1 oder 2, **dadurch gekennzeichnet, dass** die Vollsicke (10) des Stopperelementes (5,5') im wesentlichen ohne Spaltbildung die Sicke (4) der Funktionslage (2) übergreift.

4. Flachdichtung nach einem der Ansprüche 1 bis 3, **dadurch gekennzeichnet, dass** das Stopperelement (5') als die jeweilige Durchgangsöffnung (3) umgebender einzelner Ring ausgebildet ist.

5. Flachdichtung nach einem der Ansprüche 1 bis 3, **dadurch** gekenntzeichnet, dass das Stopperelement (5) in Abhängigkeit von der Anzahl der Durchgangsöffnungen (3) brillenförmig ausgebildet ist.

6. Verfahren zur Herstellung einer mindestens eine, mit mindestens einer Durchgangsöffnung (3) versehenen Funktionslage (2) sowie mindestens ein Stopperelement (5,5') beinhaltenden Flachdichtung, insbesondere einer Zylinderkopfdichtung (1,1') fiir eine Verbrennungskraftmaschine, indem das Stopperelement (5,5') auf die Funktionslage (2) aufgelegt und mit selbiger, durch Schweißen (6), verbunden wird, **dadurch gekennzeichnet, dass** die Verbindung (6) zwischen der Funktionslage (2) und dem Stopperelement (5,5') durch Punktschweißen erfolgt und anschließend zur Erzeugung einer Sicke (4,10) die Funktionslage (2) und das Stopperelement (5,5') umgeformt werden, dergestalt, dass bei der umgeformten Flachdichtung der Verbindungsbereich (6) zwischen Funktionslage (2) und Stopperelement (5,5') - bezogen auf die Durchgangsöffnung (3) - nur hinter der Sicke (4,10) vorgesehen wird.

7. Verfahren nach Anspruch 6, **dadurch gekennzeichnet, dass** durch die Umformung übereinander angeordnete Vollsicken (4,10) im Bereich der Funktionslage (2) sowie des Stopperelementes (5,5') erzeugt werden.

## Claims

1. Gasket, in particular a cylinder head gasket (1,1') for use in internal combustion engines, comprising at least one functional layer (2), which is provided with at least one continuous opening (3) and which is provided with at least one bead (4) in the region of the continuous opening (3), and which is connected in this region to at least one stopper element (5, 5'), in particular by means of welding (6), wherein the stopper element (5, 5') substantially corresponds to the contour of the bead (4) and is positioned in the region of the bead (4), **characterised in that** the connection between the functional layer (2) and the stopper element (5, 5') is only provided radially to the rear the bead (4), in relation to the continuous opening (3), and that the connection (6) between the functional layer (2), which is comprised of spring steel, and the stopper element (5, 5') is created by means of spot welding.

2. Gasket according to claim 1, **characterised in that** the bead (4) is a full bead, and that the stopper element (5, 5') in a corresponding manner also contains a full bead (10).

3. Gasket according to claim 1 or 2, **characterised in that** the full bead (10) of the stopper element (5, 5') overlaps the bead (4) of the functional layer (2) without forming a gap.

4. Gasket according to one of claims 1 to 3, **characterised in that** the stopper element (5') is formed as the single ring surrounding the relevant continuous opening (3).

5. Gasket according to one of claims 1 to 3, **characterised in that** the stopper element (5) is formed, depending on the number of continuous openings (3), in the shape of spectacles.

6. Method for producing a gasket comprising at least one functional layer (2) which is provided with at least one continuous opening (3) and with at least one stopper element (5, 5'), in particular a cylinder head gasket (1, 1') for use in an internal combustion engine, in that the stopper element (5, 5') rests on the functional layer (2) and is connected thereto by means of welding (6), **characterised in that** the connection (6) between the functional layer (2) and the stopper element (5, 5') is created by means of spot welding, and subsequently the functional layer (2) and the stopper element (5, 5') are reshaped to create a bead (4, 10) in such a way that in the reshaped gasket the connecting area (6) between functional layer (2) and stopper element (5, 5') is only provided to the rear of the bead (4, 10) in relation to the continuous opening (3).

7. Method according to claim 6, **characterised in that** overlapping full beads (4, 10) are created in the region of the functional layer (2) and of the stopper element (5, 5') by means of the reshaping.

## Revendications

1. Joint d'étanchéité plat, en particulier joint de culasse (1,1') pour des moteurs à combustion interne, comprenant au moins une couche fonctionnelle (2) présentant au moins une ouverture de passage (3), couche qui est pourvue d'au moins une moulure (4) dans la région de l'ouverture de passage (3) et qui est reliée dans cette région à au moins un élément d'arrêt (5, 5'), en particulier par soudage (6), sachant que pour l'essentiel l'élément d'arrêt (5, 5') épouse le, ou correspond au, contour de la moulure (4) et est positionné dans la région de la moulure (4), **caractérisé en ce que** la liaison entre la couche fonctionnelle (2) et l'élément d'arrêt (5, 5') est prévue, relativement à l'ouverture de passage (3), uniquement radialement en arrière de ou derrière la moulure (4), et en cc que la liaison (6) entre la couche fonctionnelle (2) constituée d'acier à ressorts et l'élément d'arrêt (5, 5') est produite par soudage par points.

2. Joint d'étanchéité plat selon la revendication 1, **caractérisé en ce que** la moulure (4) est une moulure pleine, et **en ce que** l'élément d'arrêt (5, 5') contient d'une manière correspondante lui aussi une moulure pleine (10).

3. Joint d'étanchéité plat selon la revendication 1 ou 2, **caractérisé en ce que** la moulure pleine (10) de l'élément d'arrêt (5, 5') engage en recouvrement la moulure (4) de la couche fonctionnelle (2) pour l'essentiel sans formation d'interstice.

4. Joint d'étanchéité plat selon l'une des revendications 1 à 3, **caractérisé en ce que** l'élément d'arrêt (5') est réalisé sous la forme d'un anneau individuel entourant l'ouverture de passage respective (3).

5. Joint d'étanchéité plat selon l'une des revendications 1 à 3, **caractérisé en ce que** l'élément d'arrêt (5) est réalisé en forme de lunettes, en fonction du nombre d'ouvertures de passage (3).

6. Procédé de fabrication d'un joint d'étanchéité plat, en particulier d'un joint de culasse (1, 1') pour un moteur à combustion interne, comprenant au moins une couche fonctionnelle (2) pourvue d'au moins une ouverture de passage (3) ainsi qu'au moins un élément d'arrêt (5, 5'), par le fait que l'élément d'arrêt (5, 5') est posé sur la couche fonctionnelle (2) et est relié à celle-ci par soudage (6), **caractérisé en ce que** la liaison (6) entre la couche fonctionnelle (2) et l'élément d'arrêt (5, 5') s'effectue par soudage par points, et la couche fonctionnelle (2) et l'élément d'arrêt (5, 5') sont ensuite façonnés pour produire une moulure (4, 10), de telle sorte que, sur le joint d'étanchéité plat façonné, la région de liaison (6) entre la couche fonctionnelle (2) et l'élément d'arrêt (5, 5') est prévue - relativement à l'ouverture de passage (3) - uniquement en arrière de ou derrière la moulure (4, 10).

7. Procédé selon la revendication 6, **caractérisé en ce que** le façonnage produit, dans la région de la couche fonctionnelle (2) ainsi que dans la région de l'élément d'arrêt (5, 5'), des moulures pleines (4, 10) disposées l'une au-dessus de l'autre.
